# EUROPÄISCHE PATENTANMELDUNG

(11) **EP 0 813 011 A1**
(43) Veröffentlichungstag der Anmeldung: **17.12.1997**
(21) Anmeldenummer: 97100445.2
(22) Anmeldetag: 14.01.1997
(51) Int. Cl.: F16K 31/06, B60T 13/68

(54) **Elektropneumatischer Druckwandler**

(30) Priorität: 15.06.1996 DE 19623960
(71) Anmelder: ROBERT BOSCH GMBH, 70442 Stuttgart (DE)
(72) Erfinder: Lange, Dietmar, Ing., 71394 Kernen (DE); Miehle, Tilman, Dipl.-Ing., 71394 Kernen (DE); Laue, Harald, Dipl.-Ing., 73732 Esslingen (DE)

(57) **Zusammenfassung**

Die Erfindung betrifft einen elektropneumatischen Druckwandler mit einem Magnetventil, das eine Magnetspule sowie einen gegen einen, einen Dichtsitz bildenden Anschlag verschiebbar geführten Anker aufweist, wobei der Anker mittels eines biegeelastischen Halteelementes gehalten ist nach DE 195 00 567.8. Es ist vorgesehen, daß im stromlosen Zustand der Magnetspule (14) der Anker (28) in einem Abstand zu dem Anschlag (34) gehalten ist, so daß sich ein Ringspalt (36) zwischen einem mit Umgebungsdruck (P_{ATM}) beaufschlagbaren Bereich und einem mit Unterdruck (P_{U}) beaufschlagbaren Bereich des elektropneumatischen Druckwandlers (10) ergibt.

## Beschreibung

Die Erfindung betrifft einen elektropneumatischen Druckwandler mit einem Magnetventil nach dem Oberbegriff des Anspruchs 1.

### Stand der Technik

In der DE 195 00 567.8 ist ein elektropneumatischer Druckwandler beschrieben, mit dem ein zwischen einem Umgebungsdruck und einem vorgebbaren Unterdruck liegender Verbraucherdruck (Verbraucherunterdruck) bereitgestellt werden kann. Die Höhe des Verbraucherdrucks wird über einen Steuerstrom eingestellt, mittels dem ein Spulenkörper eines Magnetventils beaufschlagt wird. Eine dem Steuerstrom proportionale Magnetkraft hält einen Anker gegen einen Dichtsitz, der einen mit dem Umgebungsdruck verbundenen Anschluß von einem Anschluß abdichtet, an dem der Verbraucherdruck anliegt. Bei den bekannten Magnetventilen ist dieser Dichtsitz bereits im stromlosen Zustand geschlossen. Hierbei ist nachteilig, daß durch systemimmanente Undichtigkeiten zwischen einem mit dem Unterdruck beaufschlagbaren Anschluß und dem den Verbraucherdruck aufweisenden Anschluß, an diesem im stromlosen Zustand des Magnetventils ein relativ großer Verbraucherunterdruck anliegt. Dies kann bei empfindlichen Anwendungen, bei denen bereits ein kleiner Verbraucherunterdruck, beispielsweise zum Auslösen von Schaltfunktionen, ausreicht, zu Fehlfunktionen führen.

### Vorteile der Erfindung

Der erfindungsgemäße elektropneumatische Druckwandler mit den im Anspruch 1 genannten Merkmalen bietet demgegenüber den Vorteil, daß im stromlosen Zustand des Magnetventils der Unterdruck an dem zu dem Verbraucher führenden Anschluß des elektropneumatischen Druckwandlers abgesenkt werden kann. Dadurch, daß im stromlosen Zustand des Magnetventils der Anker in einem Abstand zu seinem Anschlag gehalten ist, stellt sich über diese somit offene Verbindung zu dem mit Umgebungsdruck beaufschlagbaren Anschluß des Magnetventils ein Druckausgleich innerhalb des elektropneumatischen Druckwandlers ein, der die Undichtigkeiten zwischen dem mit dem Unterdruck beaufschlagbaren Anschluß und dem den Verbraucherdruck aufweisenden Anschluß zumindestens zum Teil kompensiert. Hieraus resultiert insgesamt ein geringerer, am Verbraucheranschluß anliegender Verbraucherunterdruck.

Vorteilhafte Ausgestaltungen der Erfindung ergeben sich aus den in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine Schnittansicht eines erfindungsgemäßen elektropneumatischen Druckwandlers und
- Figur 2: eine Ausgangskennlinie des elektropneumatischen Druckwandlers.

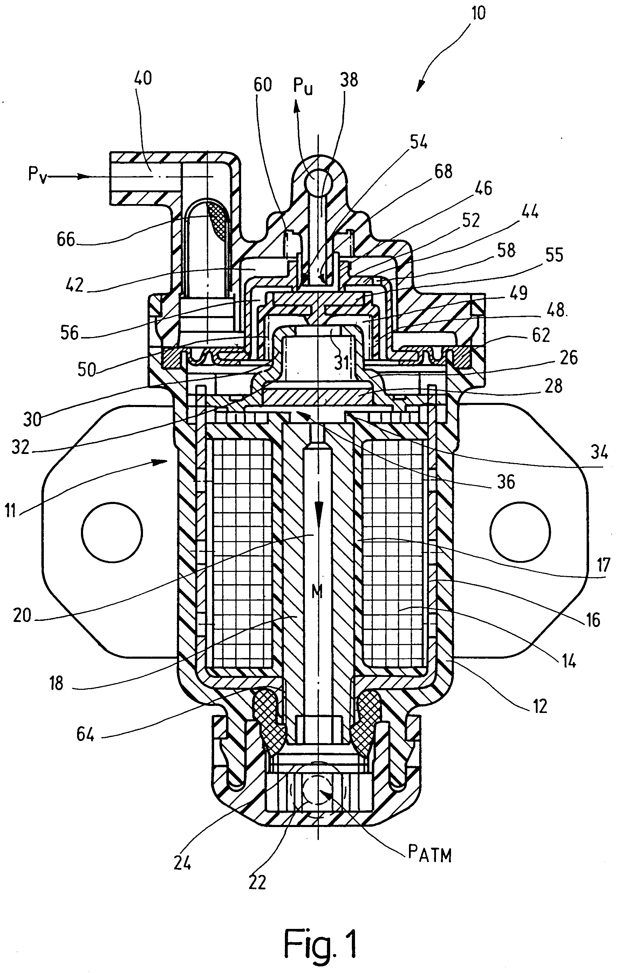

Figur 1 zeigt ein insgesamt mit 10 bezeichneten elektropneumatischen Druckwandler, mit einem proportional arbeitendem Magnetventil 11. Der elektropneumatische Druckwandler 10 besitzt ein Gehäuse 12, innerhalb dem eine Magnetspule 14 angeordnet ist. Die Magnetspule 14 wird von einem Magnettopf 16 umgriffen. Die Magnetspule 14 nimmt einen Magnetkern 18 auf, durch den eine axiale Durchgangsöffnung 20 führt. Die Durchgangsöffnung 20 ist mit einem Stutzen 22 verbunden, an dem Umgebungsdruck P_{ATM} anliegt. Zwischen dem Stutzen 22 und der Durchgangsöffnung 20 ist ein Filter 24 zur Luftreinigung angeordnet.

Der Magnetkern 18 wird von einem Joch 26 überspannt, in dem ein Anker 28 gehalten ist. Der Anker 28 ist durch ein hier nicht näher dargestelltes biegeelastisches Halteelement am Joch 26 befestigt, wie es beispielsweise in der DE 195 00 567.8 beschrieben ist. Das Joch 26 besitzt eine Ausformung 30, innerhalb der ein Federelement 32 angeordnet ist, das sich einerseits an einem Boden der Ausformung 30 und andererseits an dem Anker 28 abstützt.

Ein Spulenkörper 17 bildet einen Anschlag 34 aus, gegen den der Anker 28 mittels einer elektromagnetischen Anzugskraft F_{M} bewegbar ist. Im unbestromten Zustand der Magnetspule 14 ist zwischen dem Anker 28 und dem Anschlag 34 ein Ringspalt 36 vorgesehen.

Das biegeelastische Halteelement übt eine Haltekraft auf den Anker aus, die diesen in einer Horizontalen hält. Die Federkraft des Federelementes 32 ist so bemessen, daß eine Auslenkung des Ankers in Richtung des Anschlages 34 durch diese Federkraft nicht erfolgt. Die Größe des Ringspaltes 36 kann durch eine plastische Verformung des biegeelastischen Halteelementes bei dessen Herstellung eingestellt werden.

Der elektropneumatische Druckwandler 10 besitzt ferner einen Stutzen 38, der von einer nicht dargestellten Unterdruckquelle mit einem Versorgungsunterdruck P_{U} beaufschlagbar ist. Darüber hinaus ist ein weiterer Stutzen 40 vorgesehen, an dem sich ein Verbraucherdruck P_{V} einstellt. Der Stutzen 40 ist mit einem Filter 66 versehen. Der Stutzen 40 ist strömungsmäßig mit einem Ringraum 42 verbunden, in dem ein Membranteller 44 gelagert ist. Der Membranteller 44 besitzt eine den Stutzen 38 umgreifende Durchgangsöffnung 46. Der Membranteller 44 seinerseits umgreift einen Topf 48, der durch die Kraft eines Federelementes 50 gegen einen Bund 52 des Membrantellers gedrückt ist, so daß sich dort ein Dichtsitz 54 ausbildet. Der Topf 48 trägt zur Ausbildung des Dichtsitzes 54 einen elastischen Dichtungseinsatz 55. Ein zwischen dem Membranteller 44 und dem Topf 48 ausgebildeter Ringraum 56 ist über eine Durchgangsöffnung 58 durch den Membranteller 44 mit dem Ringraum 42 verbunden. Der Ringraum 56 seinerseits ist strömungstechnisch über den Ringspalt 36 und die Durchgangsöffnung 20 mit dem Umgebungsdruck P_{ATM} beaufschlagt. Der Topf 48 umgibt einen Innenraum 49, der über eine Durchgangsöffnung 31 mit der Ausformung 30 in Verbindung steht. Der Innenraum 49 steht ferner mit dem Ringraum 56 in Verbindung.

Der Membranteller 44 ist gegen die Kraft eines Federelementes 60 innerhalb des Ringraumes 42 bewegbar. Gelagert ist der Membranteller 44 über eine in dem Gehäuse 12 dicht festgelegte Membran 62.

Der Magnetkern 18 ist über ein Gewinde 64 höhenverstellbar, so daß der Abstand zwischen dem Anschlag 34 und dem Anker 28 und damit die Weite des Ringspaltes 36 variiert werden kann, sowie durch die Verstellung des Magnetkerns 18 der Einfluß der Anzugskraft F_{M} auf den Anker 28 insgesamt eingestellt werden kann.

Das in Figur 1 gezeigte Magnetventil 10 übt folgende Funktion aus:

Im Ausgangszustand ist die Magnetspule 14 stromlos geschaltet, das heißt ein effektiver Steuerstrom I_{eff}=0. Hierdurch liegt über den Stutzen 22, die Durchgangsöffnung 20 sowie dem Ringspalt 36 in dem Ringraum 56 Umgebungsdruck P_{ATM}, an. An dem Stutzen 38 ist die Unterdruckquelle angeschlossen, so daß über die Durchgangsöffnung 46 des Membrantellers 44 der Unterdruck in dem Ringraum 42 anliegt. Der Ringraum 42 wird hierdurch evakuiert, so daß der Membranteller 44 angehoben wird. Der Topf 48 folgt dieser Bewegung aufgrund der Federkraft der Feder 50, bis der Dichtungseinsatz 55 an dem Stutzen 38 anliegt und ein Ventilsitz 68 schließt. Über die Durchgangsöffnung 58 erfolgt ein Druckausgleich zwischen dem Ringraum 42 und dem Ringraum 56, so daß der Membranteller 44 durch die Kraft des Federelementes 60 nach unten gedrückt wird und sich der Ventilsitz 68 wieder öffnet. Hierauf wird der Ringraum 42 erneut evakuiert, so daß dieser Vorgang sich wiederholt. Dieser Vorgang wiederholt sich permanent, so daß der Membranteller 44 und der Topf 48 mit einer bestimmten Frequenz flattern.

Durch den im Ringraum 56, über die Durchgangsöffnung 20 und dem Ringspalt 36, anliegenden Umgebungsdruck P_{ATM} während dieses permanenten Flatterns wird erreicht, daß sich an dem Stutzen 40, der strömungsmäßig mit dem Ringraum 42 verbunden ist, nur ein relativ geringer Verbraucherunterdruck P_{V} einstellt, da ein Druckausgleich mit dem Umgebungsdruck P_{ATM} zusätzlich erfolgt. Gegenüber dem Stand der Technik, bei dem der Anker 28 im stromlosen Zustand der Magnetspule 14 auf dem Anschlag 34 dichtend aufliegt, und der zusätzliche Druckausgleich nicht erfolgt, können somit durch die Funktion des elektropneumatischen Druckwandlers bedingte Undichtigkeiten zu großen Teilen vom Umgebungsdruck P_{ATM} kompensiert werden. Der im Ruhezustand am Stutzen 40 anliegende Verbraucherunterdruck P_{V} ist somit gegenüber dem Stand der Technik verringert. Damit kann das Arbeitsvermögen eines über den Verbraucherunterdruck P_{V} angesteuerten Stellgliedes, beispielsweise ein Abgasrückführungsventil eines Kraftfahrzeuges, vollständiger ausgenutzt werden.

Der an dem Stutzen 40 anliegende Verbraucherunterdruck P_{V} kann durch Bestromung der Magnetspule 14 mit dem Stellstrom I_{eff} geregelt werden. Als Stellstrom I_{eff} kann Gleichstrom, Wechselstrom oder pulsbreitenmodulierter Strom verwendet werden. Bei Ansteigen des Stellstromes I_{eff} steigt die Anzugskraft F_{M} an, bis sie bei einem bestimmten Wert des Stellstromes I_{eff} so groß geworden ist, daß der Anker 28 gegen den Anschlag 34 gezogen wird. Durch die Aufhängung des Ankers 28 an dem biegeelastischen Halteelement kann dieser ausgelenkt werden. Durch den hiermit vorerst fehlenden Druckausgleich zwischen dem Umgebungsdruck P_{ATM} und dem Ringraum 56 findet zwischen dem Ringraum 42 und dem Ringraum 56 über die Durchgangsöffnung 58 ein Druckausgleich statt, so daß der Membranteller 44 durch die Kraft des Federelementes 60 nach unten gedrückt wird. Der Bund 52 drückt gleichzeitig den Topf 48 gegen die Kraft der Feder 50 nach unten, so daß über den nunmehr offenen Ventilsitz 68 der Unterdruck über den Ringraum 42 einen Verbraucherunterdruck P_{V} am Stutzen 40 einstellt. Dieser sich einstellende Verbraucherunterdruck P_{V} liegt über der Durchgangsöffnung 58, den Ringraum 56, den Ringraum 49 sowie der Durchgangsöffnung 31 an der Oberseite des Ankers 28 an. Ist die Druckdifferenz zwischen dem sich einstellenden Verbraucherunterdruck P_{V} und dem Umgebungsdruck P_{ATM} so groß, daß der Umgebungsdruck P_{ATM} den Anker 28 gegen die Anzugskraft F_{M} und die Kraft des Federelementes 32 vom Anschlag 34 abhebt, findet über den sich einstellenden Ringspalt 36 eine Belüftung des Systems statt, so daß der Verbraucherunterdruck P_{V} auf einen konstanten Wert eingeregelt werden kann, da der Ringspalt 36 aufgrund der Druckverhältnisse abwechselnd öffnet beziehungsweise schließt. Die Größe des eingeregelten Verbraucherunterdruckes P_{V} wird durch die Höhe des Steuerstromes I_{eff} gesteuert, da dieser die Anzugskraft F_{M} bestimmt, die dem Umgebungsdruck P_{ATM} entgegengesetzt wird.

Soll der Verbraucherunterdruck P_{V} verringert werden, so wird der Steuerstrom I_{eff} reduziert. Die hiermit verbundene Abnahme der Anzugskraft F_{M} bewirkt, daß der von außen anliegende Umgebungsdruck P_{ATM} den Anker 28 von dem Anschlag 34 abhebt und über den Ringspalt 36 Umgebungsluft in den Ringraum 56 einströmen kann. Die einströmende Umgebungsluft drückt den Membranteller 44 nach oben, wodurch der Topf 48 mittels der Kraft des Federelementes 50 mit seinem Dichtungselement 55 den Ventilsitz 68 schließt. Über die Durchgangsöffnung 58 findet eine Druckerhöhung im Ringraum 42 und somit am Stutzen 40 statt.

Soll der Verbraucherunterdruck P_{V} sehr rasch abgesenkt werden, erfolgt durch Abschalten des Steuerstromes I_{eff} eine Aufhebung der Anzugskraft F_{M}, so daß über den Ringspalt 36 ein sehr schneller Druckanstieg in den Ringraum 56 erfolgt. In diesem Falle erfolgt über die Durchgangsöffnung 58 der Druckausgleich zwischen dem Ringraum 42 und 56 nicht rasch genug. Aufgrund des herrschenden Druckunterschiedes zwischen dem Ringraum 56 und dem Ringraum 42, wird der Membranteller 44 entgegen der Kraft des Federelementes 60 nach oben bewegt, so daß sich zusätzlich der Dichtsitz 54 öffnet. Hierdurch wird eine Verbindung großen Querschnitts zwischen den Ringräumen 56 und 42 erreicht, so daß eine schnelle Belüftung des Ringraumes 42 und damit des Stutzens 40 erfolgen kann.

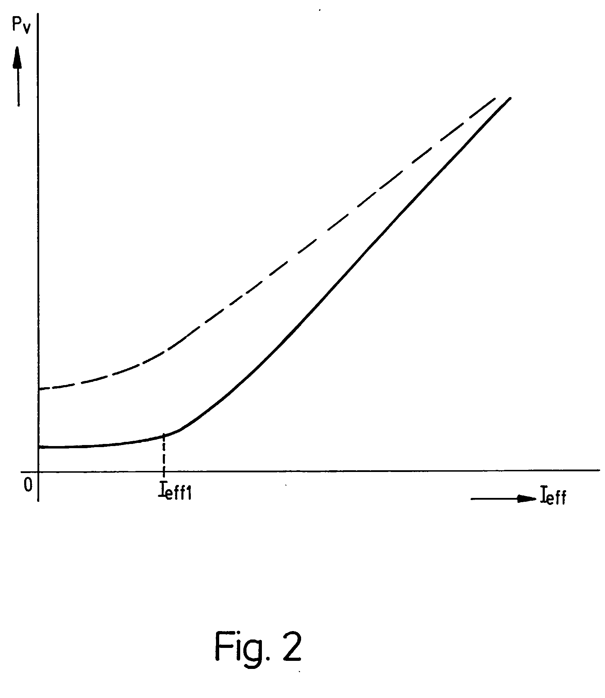

In der Figur 2 ist ein Vergleich der Ausgangskennlinien des erfindungsgemäßen elektropneumatischen Druckwandlers und eines aus dem Stand der Technik bekannten elektropneumatischen Druckwandlers gezeigt. Es ist der Verbraucherunterdruck P_{V} in Abhängigkeit des Steuerstromes I_{eff} dargestellt. Die durchgezogene Linie charakterisiert den erfindungsgemäßen elektropneumatischen Druckwandler und die gestrichelt dargestellte Linie den elektropneumatischen Druckwandler nach dem Stande der Technik. Es wird deutlich, daß wenn der Steuerstrom I_{eff} den Wert 0 annimmt, der erfindungsgemäße elektropneumatische Druckwandler einen deutlich geringeren Verbraucherunterdruck P_{V} bereitstellt. Somit können mit diesem elektropneumatischen Druckwandler bereits Stellglieder angesteuert werden, die im Bereich von geringen Verbraucherunterdrücken P_{V} arbeiten.

Darüber hinaus wird eine anfänglich fast horizontale Kennlinie erzielt, die bei einem Wert I_{eff1} in eine nahezu linear ansteigende Kennlinie übergeht. Der Wert I_{eff1} charakterisiert den Steuerstrom, bei dem die Anzugskraft F_{M} so groß wird, daß der Anker 28 angezogen wird und den Ringspalt 36 verschließt.

## Patentansprüche

1. Elektropneumatischer Druckwandler mit einem Magnetventil, das eine Magnetspule sowie einen gegen einen, einen Dichtsitz bildenden Anschlag verschiebbar geführten Anker aufweist, wobei der Anker mittels eines biegeelastischen Halteelementes gehalten ist, nach DE 195 00 567.8, **dadurch gekennzeichnet**, daß im stromlosen Zustand der Magnetspule (14) der Anker (28) in einem Abstand zu dem Anschlag (34) gehalten ist, so daß sich ein Ringspalt (36) zwischen einem mit Umgebungsdruck (P_{ATM}) beaufschlagbaren Bereich und einem mit Unterdruck (P_{U}) beaufschlagbaren Bereich des elektropneumatischen Druckwandlers (10) ergibt.

2. Elektropneumatischer Druckwandler nach Anspruch 1, **dadurch gekennzeichnet**, daß der Ringspalt (36) durch das biegeelastische Halteelement einstellbar ist.

3. Elektropneumatischer Druckwandler nach einem der vorhergehenden Ansprüche, **dadurch gekennzeichnet**, daß eine den Anker (28) in einer Horizontalen haltenden Federkraft des Halteelementes größer ist als eine senkrecht auf den Anker (28) wirkende Federkraft eines den Anker (28) in Richtung des Anschlages (34) drückenden Feder (32).
